# EUROPEAN PATENT APPLICATION

(11) **EP 1 241 716 A2**
(43) Date of publication of application: **18.09.2002**
(21) Application number: 02251773.4
(22) Date of filing: 13.03.2002
(51) Int. Cl.: H01M 2/10

(54) **Box-shaped member for automobile**

(30) Priority: 13.03.2001 JP 2001070482
(71) Applicant: YAZAKI CORPORATION, Minato-ku Tokyo 108 (JP)
(72) Inventor: Murofushi, Eiji, Susono-shi, Shizuoka (JP); Kato, Tatsuya, Susono-shi, Shizuoka (JP)
(74) Representative: Brunner, Michael John

(57) **Abstract**

A box-shaped automotive member includes a box-like body (2) for containing various parts, and this box-like body is formed of a hollow-grains-dispersed composite material having hollow grains contained in a metallic matrix. The content of the hollow grains is 50 to 70%, and the hollow grains are made of a material selected from a mullite material, an alumina material, a carbon material and a SiO₂ material. Particularly when the box-like body is applied to a battery box (1) which can receive a battery or a junction box, this is effective for enhancing the fuel consumption.

## Description

This invention relates to a box-shaped member for an automobile, and more particularly to a box-shaped automotive member for receiving, for example, a battery, a junction box and the like mounted on an automobile.

Generally, a box-shaped automotive member for receiving a battery, a junction box and the like is used in an electric vehicle. Such a box-shaped automotive member is required to have shielding properties so as to protect electrical circuit parts, such as a battery, a relay and a fuse, received therein, and therefore is formed using a metal material.

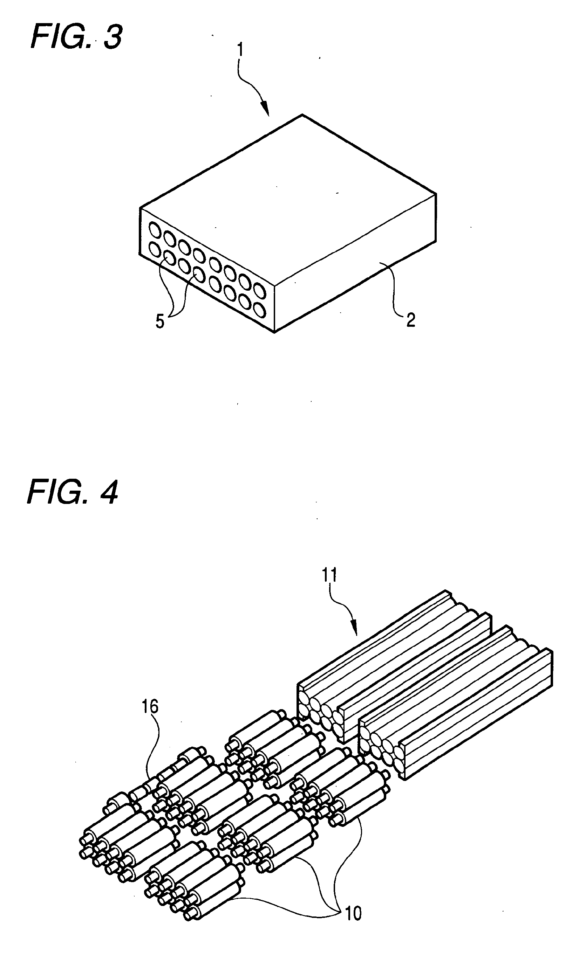

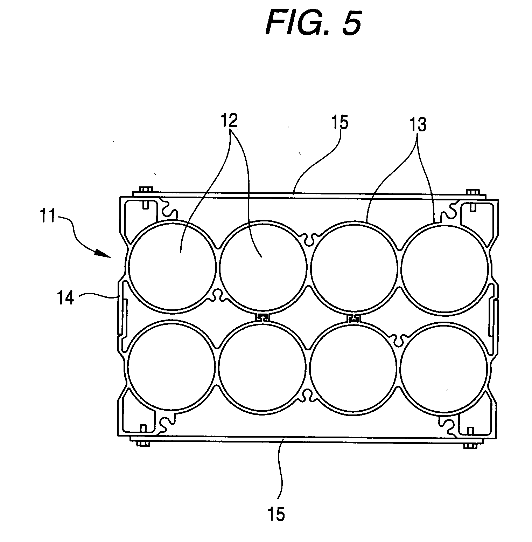

Figs. 4 and 5 show one example of related battery cases having a junction box-receiving structure. As shown in Fig. 4, the battery case 11 for receiving battery cells 10 is formed of extruded aluminum. As shown in Fig. 5 on an enlarged scale, covers 15 are mounted respectively on upper and lower sides of a case body 14 including a plurality of cylindrical portions 13 each having a battery receiving space 12 extending therethrough from its front to its rear end, and therefore the battery case is formed in a box-like shape.
The battery cells 10 and a junction box 16 for connecting the battery cells to a vehicle-driving motor are adapted to be received in the battery receiving spaces 12.

The related battery case 11 needs to have shielding properties, and therefore must be formed of a metal material. However, when such a metal material is used, there arises a problem that the fuel consumption is worsened because of its weight.
When in addition to such battery cases, other box-shaped parts, requiring shielding properties, are used in an increased number, the weight of the vehicle increased, thus inviting a problem that the vehicle failed to meet the requirement for a lightweight design.

This invention has been made in order to solve the above problems, and an object of the invention is to provide a box-shaped automotive member which is formed, using a hollow-grains-dispersed composite material, so as to achieve a lightweight design without adversely affecting shielding properties.

In order to solve the aforesaid object, the invention is characterized by having the following arrangement.
(1) A box-shaped automotive member comprising:
   a box-like body for containing automotive parts, wherein the box-like body is made of a hollow-grains-dispersed composite material having hollow grains contained in a metallic matrix.
(2) The box-shaped automotive member according to (1), wherein content of the hollow grains is 50 to 70%.
(3) The box-shaped automotive member according to (1), wherein the hollow grains are made of one of a mullite material, an alumina material, a carbon material and a SiO₂ material.
(4) The box-shaped automotive member according to (1),
wherein the box-like body is a battery box which can receive at least one of a battery and a junction box therein.

The hollow grains are filled in a mold, and the molten metal is poured into this mold, thereby molding the box-shaped automotive member of the above construction. By thus forming the box-shaped automotive member by the hollow-grains-dispersed composite material, the lightweight design can be achieved without adversely affecting shielding properties.

In the accompanying drawings:-
Fig. 1 is an exploded, perspective view of one preferred embodiment of a box-shaped automotive member of the present invention.
Fig. 2 is a perspective view showing the box-shaped automotive member of Fig. 1 in its completed condition.
Fig. 3 is a perspective view of another embodiment of a box-shaped automotive member of the invention.
Fig. 4 is an exploded, perspective view showing a related junction box-receiving structure.
Fig. 5 is a front-elevational view of a battery case of Fig. 4.

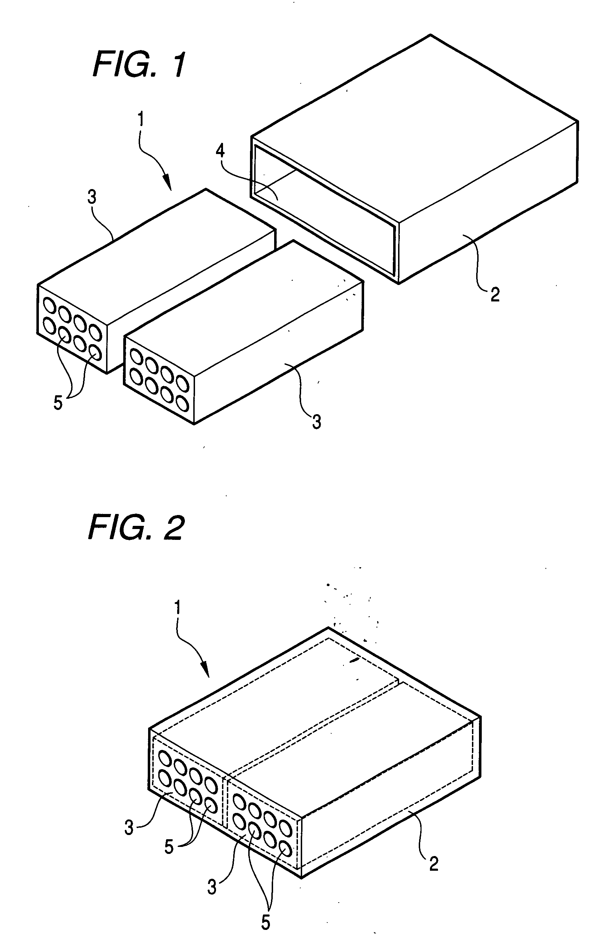

One preferred embodiment of a box-shaped automotive member of the present invention will now be described with reference to Figs. 1 to 3. Fig. 1 is an exploded, perspective view of a battery box which is one preferred embodiment of the box-shaped automotive member of the invention, Fig. 2 is a perspective view showing the battery box of Fig. 1 in its completed condition, and Fig. 3 is a perspective view of another embodiment of a box-shaped automotive member of the invention in the form of a battery case.

As shown in Fig. 1, the battery box 1, which is the box-shaped automotive member of this embodiment, comprises an outer box-like body 2, and battery cases 3 received in this box-like body 2.
The box-like body 2 is in the form of a hollow box having a receiving portion 4 having opposite open ends, and each battery case 3 has a rectangular cross-sectional shape, and has a plurality of cylindrical battery receiving portions 5 formed therein.
As shown in Fig. 2, a set of (two) battery cases 3 are inserted into the box-like body 2 to form the battery box 1.

In this embodiment, the box-like body 2, as well as the battery cases 3, is formed of a hollow-grains-dispersed composite material. This hollow-grains-dispersed composite material is formed by dispersing about 50vo1.% to about 70vol.% of heat-resistant, fine hollow grains in a metallic matrix, thus providing a lightweight composite material. With this construction, the lightweight design can be achieved while maintaining shielding properties of metal.

The battery box 1, employing the above hollow-grains-dispersed composite material, is produced, for example, in the following manner.

### Example

Hollow grains (grain size of 10 to 100 µm), each comprising a ceramic mullite balloon, are filled in a mold, and this mold is preheated to about 900°C, and molten metal is poured into the mold while maintaining the pressure within the mold at a predetermined vacuum. In this manner, the box-like body 2 and the battery cases 3 are molded. Aluminum, having the specific gravity of 2.7, is used as the metallic matrix.

As shown in Fig. 2, the battery cases 3 are fitted into the box-like body 2 to form the battery box 1. As a result, the specific gravity of the hollow-grains-dispersed composite material is 1.34, and its unit weight can be reduced to about 1/2 of that of a conventional extruded aluminum product.

Instead of the mullite hollow grains, alumina hollow grains, carbon hollow grains, SiO₂ hollow grains or others can be used as the above hollow grains.
Instead of the above aluminum, metal with a low specific gravity, such as an aluminum alloy or a magnesium alloy, can be used.

In the above embodiment, the box-like body 2 and the battery cases are molded separately from each other, and these are combined together. However, there may be adopted a construction shown in Fig. 3, in which battery receiving portions 5 are formed in a box-like body 2, and therefore the box-like body 2 serves as a battery box 1.
In the above embodiment, although the box-shaped automotive member is the battery box, the invention is not limited to it, but can be applied to an electric connection box such as a junction block (J/B) and a relay box requiring shielding.

As described above, the box-shaped automotive member of this embodiment is formed of the hollow-grains-dispersed composite material having the hollow grains contained in the metallic matrix, and with this construction the lightweight design can be achieved without adversely affecting the shielding properties, and the fuel consumption can be enhanced.

As described above, the box-shaped automotive member of the present invention is formed of the hollow-grains-dispersed composite material having the hollow grains contained in the metallic matrix, and with this construction the lightweight design can be achieved without adversely affecting the shielding properties, and the fuel consumption of the automobile, on which this box-shaped automotive member is mounted, can be much enhanced.

The content of the hollow grains is 50 to 70%, and the hollow grains are made of a material selected from a mullite material, an alumina material, a carbon material and a SiO₂ material, and therefore, its unit weight can be reduced to 1/2 of that of a conventional extruded product of lightweight metal.
The box-like body is in the form of a battery box which can receive a battery or a junction box, and by doing so, there can be provided the battery box which is particularly lightweight, and therefore the fuel consumption can be further enhanced.

## Claims

1. A box-shaped automotive member comprising:
a box-like body for containing automotive parts, wherein the box-like body is made of a hollow-grains-dispersed composite material having hollow grains contained in a metallic matrix.

2. The box-shaped automotive member according to claim 1, wherein content of the hollow grains is 50 to 70%.

3. The box-shaped automotive member according to claim 1, wherein the hollow grains are made of one of a mullite material, an alumina material, a carbon material and a SiO₂ material.

4. The box-shaped automotive member according to claim 1, wherein the box-like body is a battery box which can receive at least one of a battery and a junction box therein.
